# EUROPÄISCHE PATENTANMELDUNG

(11) **EP 4 751 861 A1**
(43) Veröffentlichungstag der Anmeldung: **03.06.2026**
(21) Anmeldenummer: 25219377.6
(22) Anmeldetag: 28.11.2025
(51) Int. Cl.: B25J 9/16, B25J 13/08, B24B 49/16, B25J 11/00

(54) **WERKZEUG ZUR KONTAKTBASIERTEN OBERFLÄCHENBEARBEITUNG, ARBEITSANTRIEBSVORRICHTUNG, VERFAHREN ZUR KONTAKTBASIERTEN OBERFLÄCHENBEARBEITUNG UND COMPUTERPROGRAMM**

(30) Priorität: 28.11.2024 DE 102024135176
(71) Anmelder: Deutsches Zentrum für Luft- und Raumfahrt e.V., 53227 Bonn (DE)
(72) Erfinder: Nottensteiner, Korbinian, 82234 Weßling (DE); Schneyer, Stefan, 82234 Weßling (DE); Eiband, Thomas, 82234 Weßling (DE)
(74) Vertreter: Ege Lee & Roider Patentanwälte

(57) **Zusammenfassung**

Werkzeug (100) zur kontaktbasierten Oberflächenbearbeitung, das Werkzeug (100) aufweisend einen Basisabschnitt (104), einen Arbeitsabschnitt (108) mit einer Arbeitsfläche (112) und einen Verbindungsabschnitt (106) zur Verbindung mit einer Arbeitsantriebsvorrichtung (102), wobei zwischen dem Basisabschnitt (104) und dem Arbeitsabschnitt (108) ein Sensorabschnitt (110) zum ortsaufgelösten Aufnehmen von Kräften wirksam ist, Arbeitsantriebsvorrichtung (102) zum Antreiben eines derartigen Werkzeugs (100) und Verfahren sowie Computerprogramm zur kontaktbasierten Oberflächenbearbeitung.

## Beschreibung

Die Erfindung betrifft ein Werkzeug zur kontaktbasierten Oberflächenbearbeitung, das Werkzeug aufweisend einen Basisabschnitt, einen Arbeitsabschnitt mit einer Arbeitsfläche und einen Verbindungsabschnitt zur Verbindung mit einer Arbeitsantriebsvorrichtung. Außerdem betrifft die Erfindung eine Arbeitsantriebsvorrichtung zum Antreiben eines Werkzeugs. Außerdem betrifft die Erfindung ein Verfahren zur kontaktbasierten Oberflächenbearbeitung. Außerdem betrifft die Erfindung ein Computerprogramm zur kontaktbasierten Oberflächenbearbeitung.

Aus dem Dokument DE 10 2021 106 990 A1 ist ein System bekannt, das folgendes umfasst: eine Handhabungsvorrichtung mit einem Linearaktor, der zwischen einem ersten Flansch, der mit einem Manipulator verbindbar ist, und einem zweiten Flansch, an dem ein Werkzeug oder eine Werkzeugmaschine mit einem Werkzeug montierbar ist, wirkt, wobei der Linearaktor nach Maßgabe einer Stellgröße eine Kraft auf den zweiten Flansch oder einen Endanschlag ausübt; einen Kraftsensor, der zwischen dem zweiten Flansch und das Werkzeug gekoppelt und dazu ausgebildet ist, bei Kontakt zwischen Werkzeug und einer Oberfläche eine von der Handhabungsvorrichtung auf das Werkzeug ausgeübte Kraft zu messen; eine Steuereinheit mit einem Zustandsbeobachter, der dazu ausgebildet ist, basierend auf der Stellgröße einen Schätzwert für die von der Handhabungsvorrichtung auf das Werkzeug ausgeübte Kraft zu ermitteln; wobei die Steuereinheit weiter dazu ausgebildet ist: einen Kontakt zwischen dem Werkzeug und der Oberfläche zu detektieren, die Stellgröße basierend auf dem Schätzwert und einem Sollwert einzustellen, solange kein Kontakt detektiert wird, und die Stellgröße basierend auf der gemessenen Kraft und dem Sollwert einzustellen, solange ein Kontakt detektiert wird.

Aus dem Dokument DE 10 2021 204 215 A1 ist ein Verfahren bekannt zur automatisierten Bearbeitung von Werkstückoberflächen durch z.B. Polieren, Schleifen oder Lackieren, bei dem mindestens ein Werkzeug mit einem Endeffektor, das zur jeweiligen Oberflächenbearbeitung ausgebildet ist, relativ in Bezug zu einer jeweiligen zu bearbeitenden Oberfläche bewegt wird, dabei werden vor, bei der Durchführung der Bearbeitung und/oder nach einer Bearbeitung in einem Bearbeitungsbereich vor, neben und/oder nach Durchführung der jeweiligen Bearbeitung in Vorschubbewegungsrichtung des Endeffektors mit mindestens einem Sensor, ortsaufgelöst Messsignale, die das momentan erreichte Bearbeitungsergebnis repräsentieren, erfasst und einer elektronischen Auswerte- und Steuereinheit, die am jeweiligen Endeffektor vorhanden ist, zugeführt, wobei mit der elektronischen Auswerte- und Steuereinheit ein Soll-Ist-Wertvergleich durchgeführt wird, ob ein vorgegebenes Arbeitsergebnis erreicht worden ist oder nicht, wobei mit dem Ergebnis des Soll-Ist-Wertvergleichs die Bearbeitung der jeweiligen Oberfläche beendet oder Parameter mit denen das jeweilige Werkzeug betrieben wird, entsprechend angepasst werden und die jeweilige Oberflächenbearbeitung im jeweiligen Oberflächenbereich mit geänderten Parametern wiederholt oder bei einer weiteren Vorschubbewegung diese Parameter angepasst werden.

Der Erfindung liegt die Aufgabe zugrunde, ein eingangs genanntes Werkzeug strukturell und/oder funktionell zu verbessern. Außerdem liegt der Erfindung die Aufgabe zugrunde, eine eingangs genannte Arbeitsantriebsvorrichtung strukturell und/oder funktionell zu verbessern. Außerdem liegt der Erfindung die Aufgabe zugrunde, ein eingangs genanntes Verfahren strukturell und/oder funktionell zu verbessern. Außerdem liegt der Erfindung die Aufgabe zugrunde, ein eingangs genanntes Computerprogramm strukturell und/oder funktionell zu verbessern.

Die Aufgabe wird gelöst mit einem Werkzeug mit den Merkmalen des Anspruchs 1. Außerdem wird die Aufgabe gelöst mit einer Arbeitsantriebsvorrichtung mit den Merkmalen des Anspruchs 4. Außerdem wird die Aufgabe gelöst mit einem Verfahren mit den Merkmalen des Anspruchs 10. Außerdem wird die Aufgabe gelöst mit einem Computerprogramm mit den Merkmalen des Anspruchs 15. Vorteilhafte Ausführungen und/oder Weiterbildungen sind Gegenstand der abhängigen Ansprüche.

Das Werkzeug ist zur kontaktbasierten Oberflächenbearbeitung ausgelegt. Das Werkzeug weist einen Basisabschnitt, einen Arbeitsabschnitt mit einer Arbeitsfläche und einen Verbindungsabschnitt zur Verbindung mit einer Arbeitsantriebsvorrichtung auf. Zwischen dem Arbeitsabschnitt und dem Basisabschnitt ist ein Sensorabschnitt zum ortsaufgelösten Aufnehmen von Kräften wirksam.

"Kontaktbasiert" bezeichnet vorliegend insbesondere eine Oberflächenbearbeitung, bei der eine Bearbeitung in mechanischem Kontaktakt zwischen Oberfläche und Werkzeug erfolgt.

Das Werkzeug kann zur rotierenden Oberflächenbearbeitung ausgelegt sein. Das Werkzeug kann zur Oberflächenbearbeitung unter Kreisbewegung ausgelegt sein. Das Werkzeug kann eine Längsachse aufweisen. Das Werkzeug kann eine Drehachse aufweisen. Das Werkzeug kann zumindest im Wesentlichen rotationssymmetrisch ausgeführt sein. Die Längsachse kann die Drehachse bilden. Die Längsachse kann eine Symmetrieachse bilden. Das Werkzeug kann zur oszillierenden Oberflächenbearbeitung ausgelegt sein. Das Werkzeug kann zur Oberflächenbearbeitung unter linearer Bewegung ausgelegt sein. Das Werkzeug kann wenigstens eine Querachse aufweisen. Die wenigstens eine Querachse kann rechtwinklig zur Längsachse angeordnet sein.

Soweit nicht anders angegeben oder es sich aus dem Zusammenhang nicht anders ergibt, beziehen sich Angaben wie "axial", "radial" und "in Umfangsrichtung" auf eine Erstreckungsrichtung der Längsachse. "Axial" entspricht dann einer Erstreckungsrichtung der Längsachse. "Radial" ist dann eine zur Erstreckungsrichtung der Längsachse rechtwinklige und sich mit der Längsachse schneidende Richtung. "In Umfangsrichtung" entspricht dann einer Bogenrichtung, insbesondere einer Kreisbogenrichtung, um die Längsachse.

Das Werkzeug kann zur Bearbeitung von Werkstücken ausgelegt sein. Das Werkzeug kann zum Bearbeiten von Werkstückoberflächen ausgelegt sein. Das Werkzeug kann dazu ausgelegt sein, durch Oberflächenbearbeitung bestimmte Maße und/oder Formen herzustellen. Das Werkzeug kann dazu ausgelegt sein, durch Oberflächenbearbeitung bestimmte Oberflächenbeschaffenheiten, wie Rauheit, und/oder optischer Erscheinungsbilder herzustellen. Das Werkzeug kann dazu ausgelegt sein, durch Oberflächenbearbeitung eine Oberfläche zu glätten und/oder zu reinigen. Das Werkzeug kann zur Oberflächenbearbeitung in einem Fertigungsverfahren, insbesondere in einem spanenden Fertigungsverfahren, ausgelegt sein. Das Werkzeug kann zur Oberflächenbearbeitung in einem spanenden Fertigungsverfahren mit geometrisch bestimmter Schneide ausgelegt sein. Das Werkzeug kann zur Oberflächenbearbeitung in einem spanenden Fertigungsverfahren mit geometrisch unbestimmter Schneide, insbesondere Schleifverfahren, ausgelegt sein. Das Werkzeug kann zur Oberflächenbearbeitung in einem Polierverfahren ausgelegt sein. Das Werkzeug kann zur Oberflächenbearbeitung in einem Reinigungsverfahren ausgelegt sein.

Das Werkzeug kann dazu ausgelegt und/oder anordenbar sein, angetrieben und/oder bewegt zu werden. Das Werkzeug kann zur Verwendung mit einer Arbeitsantriebsvorrichtung ausgelegt und/oder anordenbar sein. Das Werkzeug kann zur Anordnung an einer Arbeitsantriebsvorrichtung ausgelegt sein. Das Werkzeug kann zum Antreiben durch eine Arbeitsantriebsvorrichtung ausgelegt und/oder anordenbar sein.

Der Basisabschnitt kann zumindest im Wesentlichen in oder entlang einer sich in radialer Richtung erstreckenden Ebene ausgebildet sein. Der Basisabschnitt kann scheibenförmig, zylinderförmig und/oder kreisförmig ausgeführt sein. Der Basisabschnitt kann plattenförmig, quaderförmig, rechteckig, polygonförmig und/oder deltaförmig ausgeführt sein. Der Basisabschnitt kann eine Arbeitsseite und eine Rückseite aufweisen. Die Arbeitsseite und die Rückseite des Basisabschnitts können axiale Seiten sein. Die Arbeitsseite und die Rückseite des Basisabschnitts können voneinander abgewandt sein. Der Basisabschnitt, insbesondere die Arbeitsseite des Basisabschnitts, kann dazu ausgelegt und/oder angeordnet sein, den Arbeitsabschnitt aufzunehmen. Der Basisabschnitt, insbesondere die Arbeitsseite des Basisabschnitts, kann zur formschlüssigen, kraftschlüssigen und/oder stoffschlüssigen Verbindung mit dem Arbeitsabschnitt ausgelegt und/oder angeordnet sein. Der Basisabschnitt, insbesondere die Arbeitsseite des Basisabschnitts, kann zur lösbaren Verbindung mit dem Arbeitsabschnitt ausgelegt und/oder angeordnet sein. Der Basisabschnitt, insbesondere die Arbeitsseite des Basisabschnitts, kann dazu ausgelegt und/oder angeordnet sein, den Arbeitsabschnitt abzustützen. Der Basisabschnitt kann steif ausgeführt sein. Der Basisabschnitt kann eine vorgegebene Stefigkeit aufweisen. Der Basisabschnitt kann eine im Hinblick auf eine kontaktbasierte Oberflächenbearbeitung und/oder auf ein ortsaufgelöstes Aufnehmen von Kräften ausgelegte Steifigkeit aufweisen. Der Basisabschnitt, insbesondere die Arbeitsseite des Basisabschnitts, kann zumindest im Wesentlichen eben sein.

Der Arbeitsabschnitt kann eine Arbeitsseite und eine Rückseite aufweisen. Die Arbeitsseite und die Rückseite des Arbeitsabschnitts können axiale Seiten sein. Die Arbeitsseite und die Rückseite des Arbeitsabschnitts können voneinander abgewandt sein. Der Arbeitsabschnitt kann eine dem Basisabschnitt, insbesondere der Arbeitsseite des Basisabschnitts, zumindest im Wesentlichen entsprechende Form aufweisen. Die Arbeitsfläche kann an der Arbeitsseite angeordnet oder mit der Arbeitsseite gebildet sein. Der Arbeitsabschnitt, insbesondere die Arbeitsfläche und/oder die Arbeitsseite des Arbeitsabschnitts, kann zur Oberflächenbearbeitung ausgelegt und/oder angeordnet sein. Der Arbeitsabschnitt, insbesondere die Arbeitsfläche und/oder die Arbeitsseite des Arbeitsabschnitts, kann zumindest im Wesentlichen eben sein. Der Arbeitsabschnitt kann einen Träger und/oder ein Trägermaterial für Schneiden, Schleifmittel, Poliermittel und/oder Reinigungsmittel aufweisen oder bilden. Der Arbeitsabschnitt, insbesondere die Arbeitsfläche und/oder die Arbeitsseite des Arbeitsabschnitts, kann Schneiden, Schleifmittel, Poliermittel und/oder Reinigungsmittel aufweisen oder bilden. Die Arbeitsfläche kann als Schleiffläche, Polierfläche oder Reinigungsfläche ausgeführt sein. Der Arbeitsabschnitt kann als Schleifscheibe, Schleifpapier, Polierscheibe oder Reinigungsscheibe ausgeführt sein.

Der Arbeitsabschnitt, insbesondere die Rückseite des Arbeitsabschnitts, kann zur formschlüssigen, kraftschlüssigen und/oder stoffschlüssigen Verbindung mit dem Basisabschnitt ausgelegt und/oder angeordnet sein. Der Arbeitsabschnitt, insbesondere die Rückseite des Arbeitsabschnitts, kann zur lösbaren Verbindung mit dem Arbeitsabschnitt ausgelegt und/oder angeordnet sein. Der Arbeitsabschnitt kann steif ausgeführt sein. Der Arbeitsabschnitt kann eine vorgegebene Steifigkeit aufweisen. Der Arbeitsabschnitt kann eine im Hinblick auf eine kontaktbasierte Oberflächenbearbeitung und/oder auf ein ortsaufgelöstes Aufnehmen von Kräften ausgelegte Steifigkeit aufweisen. Der Arbeitsabschnitt kann biegeschlaff, forminstabil, formlabil oder nicht formstabil ausgeführt sein.

Der Arbeitsabschnitt kann mit dem Basisabschnitt verbunden sein. Der Arbeitsabschnitt kann mit dem Basisabschnitt formschlüssig, kraftschlüssig und/oder stoffschlüssig verbunden sein. Der Arbeitsabschnitt kann mit dem Basisabschnitt fest verbunden sein. Der Arbeitsabschnitt kann mit dem Basisabschnitt in einer zur Längsachse rechtwinkligen Ebene fest verbunden sein. Der Arbeitsabschnitt kann mit dem Basisabschnitt lösbar verbunden sein. Der Arbeitsabschnitt kann auswechselbar sein. Zwischen dem Basisabschnitt, insbesondere der Arbeitsseite des Basisabschnitts, und dem Arbeitsabschnitt, insbesondere die Rückseite des Arbeitsabschnitts, kann eine lösbare Verbindung, beispielsweise eine Klettverbindung, angeordnet und/oder wirksam sein. Der Basisabschnitt und der Arbeitsabschnitt können zumindest abschnittsweise relativ zueinander verlagerbar sein. Der Basisabschnitt und der Arbeitsabschnitt können zumindest abschnittsweise in axialer Richtung relativ zueinander verlagerbar sein. Der Arbeitsabschnitt kann werkzeuglos mittels Klettverbindung lösbar und/oder auswechselbar mit dem Basisabschnitt verbunden sein, wobei der Sensorabschnitt auch nach mehrfachem Wechsel funktionsfähig bleibt.

Der Verbindungsabschnitt des Werkzeugs ist zur Verbindung mit einer Arbeitsantriebsvorrichtung ausgelegt und/oder angeordnet. Der Verbindungsabschnitt des Werkzeugs kann dazu ausgelegt und/oder angeordnet sein, das Werkzeug ort- und/oder lagedefiniert an einer Arbeitsantriebsvorrichtung festzulegen. Der Verbindungsabschnitt des Werkzeugs kann an der Rückseite des Basisabschnitts angeordnet sein. Der Basisabschnitt und der Verbindungsabschnitt des Werkzeugs können miteinander fest verbunden sein. Der Basisabschnitt und der Verbindungsabschnitt des Werkzeugs können einstückig hergestellt sein. Der Verbindungsabschnitt des Werkzeugs kann stiftförmig oder bolzenförmig ausgeführt sein.

Der Sensorabschnitt kann wenigstens ein Sensorelement aufweisen. Der Sensorabschnitt, insbesondere das wenigstens eine Sensorelement, kann dazu ausgelegt und/oder angeordnet sein, auf Kräften basierende und/oder Kräfte repräsentierende Messdaten oder Messwerte aufzunehmen. Aufgenommen Kräfte, Messdaten oder Messwerte können auch als Sensordaten bezeichnet werden. Der Sensorabschnitt, insbesondere das wenigstens eine Sensorelement, ist zum Aufnehmen von Kräften ausgelegt und/oder angeordnet. Die Kräfte können Druckkräfte sein. Druckkräfte sind vorliegend insbesondere in axialer Richtung wirkende Kräfte. Die Kräfte können Querkräfte sein. Querkräfte sind vorliegend insbesondere in einer zur Längsachse rechtwinkligen Ebene wirkende Kräfte. Querkräfte können in radialer Richtung und/oder in Umfangsrichtung wirkende Kräfte sein. Querkräfte können Reibungskräfte sein oder aus Reibung resultieren. Das wenigstens eine Sensorelement kann ein Kraftaufnehmer sein. Das wenigstens eine Sensorelement kann ein aktiver Kraftaufnehmer oder ein passiver Kraftaufnehmer sein. Das wenigstens eine Sensorelement kann ein piezoresistiver Kraftaufnehmer, ein piezoelektrischer Kraftaufnehmer, ein kapazitiver Kraftaufnehmer, ein induktiver Kraftaufnehmer oder ein elektrodynamischer Kraftaufnehmer sein. Das wenigstens eine Sensorelement kann ein Geber sein. Der Geber kann abtastbar sein. Der Geber kann zum Aufnehmen von Kräften ausgelegt und/oder angeordnet sein. Das wenigstens eine Sensorelement kann zum magnetfeldbasierten Aufnehmen von Kräften ausgelegt und/oder angeordnet sein. Das wenigstens eine Sensorelement kann ein Magnet sein.

Das wenigstens eine Sensorelement kann als sogenannter Force Sensing Resistor ausgeführt sein. Ein als Force Sensing Resistor ausgeführtes Sensorelement kann Kunststofffolien, eine halbleitende Paste und/oder elektrische Kontakte aufweisen. Die halbleitende Paste kann graphithaltig sein. Die elektrischen Kontakte können gitterförmig oder kammförmig ausgeführt sein, ineinander verschachtelt angeordnet sein, voneinander isoliert sein und/oder externe Anschlüsse aufweisen. Die halbleitende Paste und/oder die elektrischen Kontakte können zwischen den Kunststofffolien angeordnet sein. Die Kunststofffolien, die halbleitende Paste und/oder die elektrischen Kontakte können sandwichartig angeordnet sein. Die Kunststofffolien können miteinander verklebt sein. In einem unbelasteten Zustand können die Kunststofffolien zumindest abschnittsweise voneinander beabstandet sein. Unter Einwirkung von Kraft und/oder Druck können die elektrischen Kontakte über die halbleitende Paste miteinander elektrisch verbindbar sein, sodass zum Aufnehmen von Druckkräften ein entsprechender elektrischen Widerstand messbar sein kann.

Der Sensorabschnitt, kann schichtförmig ausgeführt sein. Insofern kann der Sensorabschnitt auch als taktile Schicht oder taktile Sensorik bezeichnet werden. Der Sensorabschnitt, insbesondere das wenigstens eine Sensorelement, kann zwischen dem Basisabschnitt und dem Arbeitsabschnitt angeordnet sein. Der Sensorabschnitt, insbesondere das wenigstens eine Sensorelement, kann in das Werkzeug integriert sein. Der Sensorabschnitt, insbesondere das wenigstens eine Sensorelement, kann in oder an dem Basisabschnitt und/oder in oder an dem Arbeitsabschnitt angeordnet sein. Der Sensorabschnitt, insbesondere das wenigstens eine Sensorelement, kann an dem Arbeitsabschnitt und/oder an dem Basisabschnitt abgestützt sein. Der Sensorabschnitt, insbesondere das wenigstens eine Sensorelement, kann über den Arbeitsabschnitt und/oder über den Basisabschnitt kraftbeaufschlagbar sein. Insofern kann der Sensorabschnitt oder das wenigstens eine Sensorelement auch als extrinsischer Sensorabschnitt oder extrinsisches Sensorelement bezeichnet werden. Der Sensorabschnitt kann aus einer Vielzahl von Sensorelementen bestehen. Die Sensorelemente können als Matrix oder Array in einer definierten Sensorebene zwischen Basis- und Arbeitsabschnitt integriert und individuell adressierbar sein. Die Sensorelemente können als drucksensitive Widerstände ausgeführt sein. Die Sensorelemente können als Sensor-Array ausgeführt sein. Die Sensorelemente können eine Matrixauflösung aufweisen. Die Sensorelemente können eine vorgegebene Anzahl von Zeilen und Spalten aufweisen (z.B. 16×16 Elemente). Die Sensorelemente können individuell adressierbar sein. Die Sensorelemente können zur Erfassung von lokalem Druck an ihrer jeweiligen Position ausgelegt sein.

Der Sensorabschnitt kann als extrinsische taktile Sensorik ausgeführt sein. Der Sensorabschnitt kann nahe der Kontaktoberfläche flächig angeordnet sein. Der Sensorabschnitt kann eine direkte Messung von Kontakteffekten ermöglichen. Der Sensorabschnitt kann dazu ausgelegt und/oder angeordnet sein, im Unterschied zu intrinsischer taktiler Sensorik nicht nur eine resultierende Kontaktkraftwirkung, sondern auch eine Kontaktfläche zu erfassen. Der Sensorabschnitt kann dazu ausgelegt und/oder angeordnet sein, einen Kontakttyp zu erfassen. Der Sensorabschnitt kann dazu ausgelegt und/oder angeordnet sein, eine Druckverteilung in einer Kontaktfläche zu erfassen.

Der Sensorabschnitt ist zum ortsaufgelösten Aufnehmen von Kräften ausgelegt und/oder angeordnet. Der Sensorabschnitt kann dazu ausgelegt und/oder angeordnet sein, Kräfte in einer Sensorebene aufzunehmen. Die Sensorebene kann rechtwinklig zur Längsachse angeordnet sein. Der Sensorabschnitt kann dazu ausgelegt und/oder angeordnet sein, die Kräfte in Bezug auf die Sensorebene ortsaufgelösten aufzunehmen. Der Sensorabschnitt kann mehrere Sensorelemente aufweisen. Die Sensorelemente können in der Sensorebene verteilt angeordnet sein. Die Sensorelemente können in regelmäßig verteilt angeordnet sein. Die Sensorelemente können matrixförmig, in Zeilen und Spalten, kreisförmig, ringförmig oder strahlenförmig angeordnet sein. Die Sensorelemente können ein Sensorarray bilden. Der Sensorabschnitt kann ortsaufgelöst in Bezug auf eine Sensorebene ausgebildet sein, insbesondere durch eine regelmäßig oder unregelmäßig matrixförmige, ringförmige oder strahlenförmige Anordnung mehrerer Sensorelemente.

"Ortsaufgelöst" kann vorliegend bedeuten, dass Kräfte an unterschiedlichen Positionen innerhalb einer Sensorebene separat erfassbar sind. "Ortsaufgelöst" kann bedeuten, dass eine Druckverteilung innerhalb einer Kontaktfläche bestimmbar ist. "Ortsaufgelöst" kann bedeuten, dass eine Position eines Kontaktpunktes innerhalb der Arbeitsfläche bestimmbar ist. "Ortsaufgelöst" kann bedeuten, dass eine Ausdehnung einer Kontaktfläche bestimmbar ist. "Ortsaufgelöst" kann bedeuten, dass eine Form einer Kontaktfläche bestimmbar ist. "Ortsaufgelöst" kann bedeuten, dass ein Kontakttyp (z.B. flächig, linienförmig, punktförmig) bestimmbar ist. "Ortsaufgelöst" kann eine räumliche Auflösung bezeichnen, die durch die Anordnung und/oder Anzahl von Sensorelementen in der Sensorebene definiert ist.

Das Werkzeug kann eine Signalschnittstelle, einen Datenspeicher, eine elektronische Kontrolleinrichtung und/oder eine elektrische Leistungsschnittstelle aufweisen. Die Signalschnittstelle des Werkzeugs kann dazu ausgelegt und/oder angeordnet sein, Sensordaten zu übertragen. Die Signalschnittstelle des Werkzeugs kann dazu ausgelegt und/oder angeordnet sein, Signale kontaktlos, beispielsweise per Funk, oder kontaktgebunden zu übertragen. Die Signalschnittstelle des Werkzeugs kann dazu ausgelegt und/oder angeordnet sein, Signale an eine Arbeitsantriebsvorrichtung, an einen Roboter und/oder an einen Computer zu übertragen. Der Datenspeicher des Werkzeugs kann zum Speichern von Sensordaten ausgelegt und/oder angeordnet sein. Die elektronische Kontrolleinrichtung des Werkzeugs kann dazu ausgelegt und/oder angeordnet sein, ein Erfassen, ein Übertragen und/oder ein Speichern von Sensordaten zu kontrollieren. Die elektronische Kontrolleinrichtung des Werkzeugs kann dazu ausgelegt und/oder angeordnet sein, Sensordaten aufzubereiten, vorauszuwerten, auszuwerten und/oder zu verarbeiten. Die elektrische Leistungsschnittstelle des Werkzeugs kann dazu ausgelegt und/oder angeordnet sein, eine Versorgung des Sensorabschnitts, insbesondere des wenigstens eine Sensorelements, mit elektrischer Energie zu ermöglichen. Die elektrische Leistungsschnittstelle des Werkzeugs kann dazu ausgelegt und/oder angeordnet sein, eine elektrische Leistung kontaktlos, beispielsweise induktiv, oder kontaktgebunden zu übertragen. Die Signalschnittstelle kann zum drahtlosen Übertragen von Sensordaten, insbesondere per Funktechnik und/oder mittels kontaktloser (z.B. induktiver) Energie- und Datenübertragung, ausgebildet sein. Die Signalübertragung kann mittels Schleifring erfolgen. Die Signalübertragung kann drahtlos erfolgen. Eine Elektronik zur Auswertung kann vollständig in das Werkzeug integriert sein. Eine Stromversorgung kann vollständig in das Werkzeug integriert sein. Die Sensordaten können zunächst gespeichert und später ausgelesen werden. Die Sensordaten können über ein Kabel an einen Computer übertragen werden. Ein Auslesen der gespeicherten Daten kann am Werkzeug oder an der Arbeitsantriebsvorrichtung erfolgen.

Der Datenspeicher des Werkzeugs und/oder die elektronische Kontrolleinrichtung des Werkzeugs können/kann in das Werkzeug integriert sein. Der Datenspeicher des Werkzeugs und/oder die elektronische Kontrolleinrichtung des Werkzeugs können/kann an oder in dem Basisabschnitt angeordnet sein.

Die Signalschnittstelle des Werkzeugs und/oder die elektrische Leistungsschnittstelle des Werkzeugs können/kann in das Werkzeug integriert sein. Die Signalschnittstelle des Werkzeugs und/oder die elektrische Leistungsschnittstelle des Werkzeugs können/kann an dem Verbindungsabschnitt des Werkzeugs angeordnet sein.

Das Werkzeug kann zur Bearbeitung von Freiformgeometrien ausgelegt und/oder angeordnet sein. Das Werkzeug kann zur Bearbeitung von Holzwerkstücken ausgelegt und/oder angeordnet sein. Das Werkzeug kann zur Bearbeitung von Metalloberflächen ausgelegt und/oder angeordnet sein. Das Werkzeug kann zur Nachbearbeitung von CNC-gefertigten Formen ausgelegt und/oder angeordnet sein. Das Werkzeug kann zur Nachbearbeitung von 3D-gedruckten Formen ausgelegt und/oder angeordnet sein. Das Werkzeug kann zur Vorverarbeitung einer Oberfläche vor dem Lackieren ausgelegt und/oder angeordnet sein. Das Werkzeug kann zum Entgraten von Kanten ausgelegt und/oder angeordnet sein.

Die Arbeitsantriebsvorrichtung ist zum Antreiben eines erfindungsgemäßen Werkzeugs ausgelegt und/oder angeordnet. Die Arbeitsantriebsvorrichtung weist einen Arbeitsantrieb auf. Die Arbeitsantriebsvorrichtung weist eine Aufnahme auf. Die Aufnahme korrespondiert mit dem Verbindungsabschnitt des Werkzeugs.

Die Arbeitsantriebsvorrichtung kann eine Längsachse aufweisen. Die Arbeitsantriebsvorrichtung kann eine Drehachse aufweisen. Die Längsachse kann die Drehachse bilden. Zur Oberflächenbearbeitung kann eine Wirkbewegung erforderlich sein. Die Wirkbewegung kann eine Relativbewegung zwischen dem Werkzeug, insbesondere der Arbeitsfläche, und einer zu bearbeitenden Oberfläche sein. Die Wirkbewegung kann eine Arbeitsbewegung und/oder eine Vorschubbewegung umfassen. Die Wirkbewegung kann sich durch Überlagerung der Arbeitsbewegung und der Vorschubbewegung ergeben. Die Arbeitsbewegung kann eine rotierende Bewegung, eine Kreisbewegung, eine oszillierende Bewegung oder eine lineare Bewegung sein. Die Arbeitsantriebsvorrichtung kann dazu ausgelegt und/oder angeordnet sein, eine Arbeitsbewegung zu bewirken.

Der Arbeitsantrieb kann einen Motor, insbesondere einen Elektromotor, ein Getriebe und/oder eine Antriebswelle aufweisen. Die Aufnahme kann zum Aufnehmen des Werkzeugs, insbesondere des Verbindungsabschnitts des Werkzeugs, ausgelegt und/oder angeordnet sein. Die Aufnahme kann dazu ausgelegt und/oder angeordnet sein das Werkzeug aufzunehmen, um damit Oberflächen zu bearbeiten. Die Aufnahme kann dazu ausgelegt und/oder angeordnet sein, das Werkzeug lösbar und/oder auswechselbar aufzunehmen. Die Aufnahme kann geometrisch komplementär mit dem Verbindungsabschnitt des Werkzeugs korrespondieren.

Die Arbeitsantriebsvorrichtung kann einen Verbindungsabschnitt aufweisen. Der Verbindungsabschnitt der Arbeitsantriebsvorrichtung kann zur Verbindung mit einem Roboter ausgelegt und/oder angeordnet sein. Der Verbindungsabschnitt der Arbeitsantriebsvorrichtung kann dazu ausgelegt und/oder angeordnet sein, die Arbeitsantriebsvorrichtung ort- und/oder lagedefiniert an einem Roboter festzulegen. Der Verbindungsabschnitt der Arbeitsantriebsvorrichtung kann flanschförmig, insbesondere als Werkzeugflansch, ausgeführt sein.

Die Arbeitsantriebsvorrichtung kann wenigstens eine Signalschnittstelle, einen Datenspeicher, eine elektronische Kontrolleinrichtung und/oder wenigstens eine elektrische Leistungsschnittstelle aufweisen.

Die wenigstens eine Signalschnittstelle der Arbeitsantriebsvorrichtung kann dazu ausgelegt und/oder angeordnet sein, Sensordaten, Daten zum Kontrollieren der Arbeitsantriebsvorrichtung und/oder Daten zum Kontrollieren eines Roboters zu übertragen. "Kontrollieren" bezeichnet vorliegend insbesondere ein steuerungs- und/oder regelungstechnisches Kontrollieren. Die wenigstens eine Signalschnittstelle der Arbeitsantriebsvorrichtung kann dazu ausgelegt und/oder angeordnet sein, Signale zwischen der Arbeitsantriebsvorrichtung einerseits und einem Werkzeug, einem Roboter und/oder einem Computer andererseits zu übertragen. Die wenigstens eine Signalschnittstelle der Arbeitsantriebsvorrichtung kann dazu ausgelegt und/oder angeordnet sein, Sensordaten, Daten zum Kontrollieren der Arbeitsantriebsvorrichtung und/oder Daten zum Kontrollieren eines Roboters zu übertragen. Die wenigstens eine Signalschnittstelle der Arbeitsantriebsvorrichtung kann dazu ausgelegt und/oder angeordnet sein, Signale kontaktlos, beispielsweise per Funk, oder kontaktgebunden zu übertragen.

Der Datenspeicher der Arbeitsantriebsvorrichtung kann zum Speichern von Sensordaten, von Daten zum Kontrollieren der Arbeitsantriebsvorrichtung und/oder von Daten zum Kontrollieren eines Roboters ausgelegt und/oder angeordnet sein.

Die elektronische Kontrolleinrichtung der Arbeitsantriebsvorrichtung kann dazu ausgelegt und/oder angeordnet sein, den Arbeitsantrieb, insbesondere den Motor, zu kontrollieren. Die elektronische Kontrolleinrichtung der Arbeitsantriebsvorrichtung kann dazu ausgelegt und/oder angeordnet sein, ein Erfassen, ein Übertragen und/oder ein Speichern von Sensordaten zu kontrollieren. Die elektronische Kontrolleinrichtung der Arbeitsantriebsvorrichtung kann dazu ausgelegt und/oder angeordnet sein, Sensordaten aufzubereiten, vorauszuwerten, auszuwerten und/oder zu verarbeiten.

Die elektrische Leistungsschnittstelle der Arbeitsantriebsvorrichtung kann dazu ausgelegt und/oder angeordnet sein, eine Versorgung des Arbeitsantriebs, insbesondere des Motors der Arbeitsantriebsvorrichtung, und/oder des Sensorabschnitts, insbesondere des wenigstens eine Sensorelements, eines Werkzeugs mit elektrischer Energie zu ermöglichen. Die elektrische Leistungsschnittstelle der Arbeitsantriebsvorrichtung kann dazu ausgelegt und/oder angeordnet sein, eine elektrische Leistung kontaktlos, beispielsweise induktiv, oder kontaktgebunden zu übertragen.

Die Arbeitsantriebsvorrichtung kann eine erste Signalschnittstelle und eine zweite Signalschnittstelle aufweisen. Die erste Signalschnittstelle kann mit einer Signalschnittstelle eines Werkzeugs korrespondieren. Die erste Signalschnittstelle kann dazu ausgelegt und/oder angeordnet sein, Signale zwischen der Arbeitsantriebsvorrichtung einerseits und einem Werkzeug andererseits zu übertragen. Die zweite Signalschnittstelle kann mit einer Signalschnittstelle eines Roboters und/oder einer Signalschnittstelle eines Computers korrespondieren. Die zweite Signalschnittstelle kann dazu ausgelegt und/oder angeordnet sein, Signale zwischen der Arbeitsantriebsvorrichtung einerseits und einem Roboter und/oder einem Computer andererseits zu übertragen.

Die Arbeitsantriebsvorrichtung kann einen Drehwinkelgeber aufweisen. Der Drehwinkelgeber kann dazu ausgelegt und/oder angeordnet sein, einen Drehwinkel des Arbeitsantriebs zu erfassen. Der Drehwinkelgeber kann ein Inkrementalgeber oder ein Absolutwertgeber sein.

Das Verfahren ist zur kontaktbasierten Oberflächenbearbeitung ausgelegt. Zum Ausführen des Verfahrens werden ein erfindungsgemäßes Werkzeug und eine erfindungsgemäße Arbeitsantriebsvorrichtung verwendet, wobei das Werkzeug mit der Arbeitsantriebsvorrichtung verbunden ist. Das Werkzeug kann mechanisch, signalleitend und/oder elektrisch leistungsübertragend mit der Arbeitsantriebsvorrichtung verbunden sein.

Zum Ausführen des Verfahrens kann ein Roboter verwendet werden. Der Roboter kann ein Industrieroboter sein. Der Roboter kann eine elektronische Kontrolleinrichtung aufweisen. Die elektronische Kontrolleinrichtung des Roboters kann zum Ausführen des erfindungsgemäßen Verfahrens ausgelegt und/oder angeordnet sein. Die elektronische Kontrolleinrichtung des Roboters kann dazu ausgelegt und/oder angeordnet sein, den Roboter und/oder die Arbeitsantriebsvorrichtung, insbesondere den Arbeitsantrieb der Arbeitsantriebsvorrichtung, zu kontrollieren. Die elektronische Kontrolleinrichtung des Roboters kann dazu ausgelegt und/oder angeordnet sein, ein Erfassen, ein Übertragen und/oder ein Speichern von Sensordaten zu kontrollieren. Die elektronische Kontrolleinrichtung des Roboters kann dazu ausgelegt und/oder angeordnet sein, Sensordaten aufzubereiten, vorauszuwerten, auszuwerten und/oder zu verarbeiten. Die elektronische Kontrolleinrichtung des Roboters kann wenigstens einen Prozessor, einen Arbeitsspeicher, einen Datenspeicher und/oder wenigstens eine Signalschnittstelle aufweisen.

Die Antriebsvorrichtung kann mit dem Roboter verbunden sein. Die Antriebsvorrichtung kann mechanisch, signalleitend und/oder elektrisch leistungsübertragend mit dem Roboter verbunden sein. Die Arbeitsantriebsvorrichtung kann mit dem Roboter ort- und/oder lagedefiniert verbunden sein. Die Arbeitsantriebsvorrichtung kann mit dem Roboter ort- und/oder lagedefiniert verbunden sein. Die Arbeitsantriebsvorrichtung kann mit dem Roboter lösbar und/oder auswechselbar aufzunehmen. Die Antriebsvorrichtung und das Werkzeug können einen Endeffektor des Roboters bilden.

Die Kräfte können mithilfe des Sensorabschnitts aufgenommen werden. Die Kräfte können während einer Oberflächenbearbeitung aufgenommen werden. Die Kräfte können ortsaufgelöst aufgenommen werden. Aufgenommene Kräfte können als Sensordaten ausgegeben, gespeichert und/oder verarbeitet werden. Die Sensordaten können zur weiteren Verarbeitung, insbesondere mithilfe eines Computers, ausgegeben und/oder gespeichert werden. Die Sensordaten können in einem Datenspeicher des Werkzeugs, in einem Datenspeicher der Arbeitsantriebsvorrichtung, in einem Datenspeicher des Roboters, in einem Datenspeicher des Computers und/oder in einem sonstigen Datenspeicher gespeichert werden.

Die Sensordaten können mithilfe einer elektrischen Kontrollvorrichtung der Arbeitsantriebsvorrichtung, mithilfe einer elektrischen Kontrollvorrichtung des Roboters und/oder mithilfe eines Computers verarbeitet werden. Die Sensordaten können verwendet werden, um ein Modell des maschinellen Lernens zu trainieren und/oder zu validieren. Das trainierte und/oder validierte Modell kann dann auch unabhängig von dem erfindungsgemäßen Werkzeug zum Kontrollieren von Arbeitsantriebsvorrichtungen und/oder Robotern verwendet werden. Die Sensordaten können in Echtzeit verarbeitet werden. Die Sensordaten können zeitlich und/oder örtlich unabhängig von einer Erfassung verarbeitet oder verwendet werden. Die Sensordaten können zur laufenden Überwachung des Werkzeugzustandes, zur Bestimmung des Verschleißzustandes und/oder zur Adaption der Bearbeitungsbahn eines Roboters in Echtzeit verwendet werden.

Drehwinkel des Werkzeugs können aufgenommen werden. Die Drehwinkel können mithilfe des Drehwinkelgebers aufgenommen werden. Die Drehwinkel können in Werkzeugkoordinaten und/oder in Koordinaten der Arbeitsantriebsvorrichtung dargestellt werden. Aufgenommene Drehwinkel können als Drehwinkeldaten ausgegeben, gespeichert und/oder bei einer Verarbeitung oder Verwendung der Sensordaten berücksichtigt werden. Die Drehwinkeldaten können entsprechend und/oder zusammen mit den Sensordaten ausgegeben, gespeichert, verarbeitet oder verwendet werden. Die ortsaufgelöst erfassten Kräfte können in ein Koordinatensystem der Arbeitsantriebsvorrichtung transformiert werden. Die ortsaufgelöst erfassten Kräfte können unabhängig von einem Drehwinkel des Werkzeugs dargestellt werden. Die Drehwinkeldaten können zur Transformation der Sensordaten von Werkzeugkoordinaten in Koordinaten der Arbeitsantriebsvorrichtung verwendet werden. Die Sensordaten können mit den Drehwinkeldaten synchronisiert werden. Eine Winkelstellung des Werkzeugs relativ zur Arbeitsantriebsvorrichtung kann bei der Auswertung der Sensordaten berücksichtigt werden.

Der Roboter kann unter Berücksichtigung der Sensordaten und/oder der Drehwinkeldaten kontrolliert werden. Der Roboter kann während einer Oberflächenbearbeitung kontrolliert werden. Der Roboter kann kontrolliert werden, um eine Vorschubbewegung der Arbeitsantriebsvorrichtung auszuführen. Der Roboter kann kontrolliert werden, um einen vorgegebenen Kontaktdruck und/oder eine vorgegebene Kontaktfläche zu erzielen, eine Ausgleichsbewegung auszuführen, einer vorgegeben Bearbeitungsbahn zu folgen, einem vorgegebenen Merkmal eines Werkstücks, beispielsweise einer Kante, zu folgen, einer vorgegebenen Führungsgröße zu folgen und/oder einen vorgegebenen Grenzwert einzuhalten.

Basierend auf den Sensordaten, den Drehwinkeldaten und/oder einer Bearbeitungszeit kann ein Bearbeitungsfortschritt berechnet werden. Das Berechnen kann ein Schätzen umfassen. Das Berechnen kann ein Aufsummieren umfassen. Das Berechnen kann ein Berechnen einer bereits erfolgten Bearbeitung, einer Ist-Zeit, einer noch auszuführenden Bearbeitung, einer noch zu erwartenden Bearbeitungszeit, einer SollZeit und/oder einer Bearbeitungsgesamtzeit umfassen. Eine den berechneten Bearbeitungsfortschritt repräsentierende Information kann einer Kontrolleinrichtung und/oder einem Benutzer kann zur Verfügung gestellt werden.

Basierend auf den Sensordaten, den Drehwinkeldaten und/oder einer Bearbeitungszeit kann ein Zustand des Werkzeugs, insbesondere des Arbeitsabschnitts, berechnet werden. Der Zustand kann ein Verschleißzustand sein. Eine den berechneten Zustand des Werkzeugs repräsentierende Information kann einer Kontrolleinrichtung und/oder einem Benutzer zur Verfügung gestellt werden. Eine Abnutzung des Arbeitsabschnitts kann geschätzt werden. Ein zeitlicher Verlauf der Druckverteilung kann ausgewertet werden. Eine kumulative Belastung des Arbeitsabschnitts kann berechnet werden. Eine Restlebensdauer des Arbeitsabschnitts kann geschätzt werden. Eine optimierte Nutzung eines Schleifmittels kann ermöglicht werden. Ein Wechselzeitpunkt für den Arbeitsabschnitt kann bestimmt werden.

Durch Benutzerdemonstration können Fertigkeiten gelernt werden. Während der Benutzerdemonstration können Demonstrationsdaten erfasst werden. Die Demonstrationsdaten können verwendet werden, um ein Modell des maschinellen Lernens zu trainieren und/oder zu validieren. Das trainierte und/oder validierte Modell kann dann auch unabhängig von dem erfindungsgemäßen Werkzeug zum Kontrollieren von Arbeitsantriebsvorrichtungen und/oder Robotern verwendet werden. Die Demonstrationsdaten können in Echtzeit verarbeitet werden. Die Demonstrationsdaten können zeitlich und/oder örtlich unabhängig von einer Erfassung verarbeitet oder verwendet werden. Die Demonstrationsdaten können eine menschliche Bearbeitungsstrategie repräsentieren. Die Druckverteilungsdaten können systematisch aufgenommen werden. Die Demonstrationsdaten können datenbasierte Roboterfertigkeiten ermöglichen. Ein Modell des maschinellen Lernens kann auf Basis von Druckverteilungsdaten trainiert werden. Eine Roboterfertigkeit kann aus erfassten Bearbeitungsstrategien erstellt werden. Die Sensordaten können zur Reproduktion einer menschlichen Bearbeitungsstrategie verwendet werden.

Die Fertigkeiten können unter Berücksichtigung der Demonstrationsdaten, der Sensordaten und/oder der Drehwinkeldaten gelernt werden. Die gelernten Fertigkeiten können genutzt werden, um einen Benutzer beim Ausführen von Aufgaben zu unterstützen, ein kollaboratives Ausführen von Aufgabe zu unterstützen und/oder Aufgaben mithilfe eines Roboters autonom auszuführen. "Kollaborativ" bezieht sich in diesem Zusammenhang insbesondere auf eine Mensch-Roboter-Kollaboration.

Das Computerprogramm ist zur kontaktbasierten Oberflächenbearbeitung unter Verwendung des erfindungsgemäßen Werkzeugs, der erfindungsgemäßen Arbeitsantriebsvorrichtung und/oder des erfindungsgemäßen Roboters ausgelegt. Das Computerprogramm umfasst Programmcodeabschnitte, mit denen ein erfindungsgemäßes Verfahren ausführbar ist, wenn das Computerprogramm ausgeführt wird. Das Computerprogramm kann mithilfe einer Kontrolleinrichtung oder eines Computers ausgeführt werden. Die Kontrolleinrichtung kann eine Kontrolleinrichtung einer Arbeitsantriebsvorrichtung oder eine Kontrolleinrichtung eines Roboters sein.

Zusammenfassend und mit anderen Worten dargestellt ergibt sich somit durch die Erfindung unter anderem ein Verfahren zur Messung von Druckverteilungen in Kontaktflächen und zur Bewegungsanpassung für die roboterbasierte Oberflächenbearbeitung mit beweglichen Werkzeugen.

In einer Werkzeugscheibe kann eine taktile Schicht vorgesehen sein. Die taktile Schicht kann auch als Sensorabschnitt bezeichnet werden. Die Werkzeugscheibe kann auch als scheibenförmiges Werkzeug bezeichnet werden. Bei einer als Schleifgerät ausgeführten Arbeitsantriebsvorrichtung kann sich diese Schicht zwischen einem Schleifpapier und Schleifwerkzeug befinden. Das Schleifpapier kann auch als Arbeitsabschnitt des Werkzeugs bezeichnet werden. Das Schleifwerkzeug kann auch als Basisabschnitt des Werkzeugs bezeichnet werden. Durch Integration einer extrinsischen taktilen Sensorik in das Werkzeug kann während der Bearbeitung eine Verteilung des Druckes über die Scheibe sensorisch erfasst werden. Damit kann ein Abbild der aktuell wirkenden Prozessgrößen näher bestimmt werden.

Eine Positionserfassung des Werkzeugs relativ zur Arbeitsantriebsvorrichtung kann eine Darstellung der Druckverteilung unabhängig von dem Winkel des Werkzeugs in einem Koordinatensystem der Arbeitsantriebsvorrichtung ermöglichen. Hierfür können Signale aus der taktilen Sensorik in dem beweglichen Werkzeug an die Arbeitsantriebsvorrichtung selbst übertragen werden.

Mithilfe der integrierten taktilen Sensorik können Informationen aus einem Bearbeitungskontakt erfasst und zur Robotersteuerung während einer Bearbeitung genutzt werden. Beispielsweise kann ein Abdruck einer Werkstoffoberfläche auf das Werkzeug erfasst werden. Die Form des Abdruckes kann als Feedback für einen Roboter genutzt werden, um einen gewünschten Sollabdruck durch geeignete Ausgleichsbewegungen herzustellen.

Dies kann beispielsweise genutzt werden, um einen möglichst flächigen Kontakt zwischen Werkzeug und Werkstück herzustellen. Auch andere gewünschte Ausprägungen der Kontaktflächen zwischen Werkzeug und Werkstück können durch eine entsprechende Anpassung einer Positionierung der Arbeitsantriebsvorrichtung durch den Roboter erzeugt werden. Außerdem können die aus dem Bearbeitungskontakt erfassten Informationen genutzt werden, um bestimmten geometrischen Merkmalen des Werkstücks während der Bearbeitung zu folgen. Zum Beispiel kann ein linienförmiger Abdruck einer Kante genutzt werden, um die Richtung der Roboterbewegung zur Bearbeitung entlang der Kante festzulegen. Ein geometrisches Merkmal eines Werkstücks kann ein Kantenverlauf sein. Ein geometrisches Merkmal eines Werkstücks kann eine Kontur sein. Ein geometrisches Merkmal eines Werkstücks kann eine Oberflächenkrümmung sein. Ein linienförmiger Abdruck einer Kante kann erfasst werden. Eine Richtung einer Roboterbewegung kann basierend auf einem erfassten Kantenverlauf bestimmt werden. Eine Bearbeitungsbahn kann entlang einer Kante geführt werden.

Über eine Analyse der Druckverteilung während der Bearbeitung kann außerdem sichergestellt werden, dass bestimmte Bearbeitungskräfte kritische Schwellen nicht überschreiten und ein gleichmäßiges Bearbeitungsbild erzeugt wird. Über eine Beobachtung der Druckverteilung über die Zeit kann ein Bearbeitungsstand einer Werkstückoberfläche durch Aufsummieren geschätzt werden. Eine lokale Bearbeitungskraft kann überwacht werden. Ein kritischer Schwellwert für eine Bearbeitungskraft kann vorgegeben werden. Eine Überschreitung eines kritischen Schwellwerts kann erkannt werden. Ein gleichmäßiges Bearbeitungsbild kann angestrebt werden. Eine Homogenität der Druckverteilung kann bewertet werden. Ein Bearbeitungsfehler kann basierend auf einer inhomogenen Druckverteilung erkannt werden.

Durch Kenntnis der Druckverteilung über die Zeit kann zudem eine Abnutzung einer Schleifscheibe besser abgeschätzt werden und damit eine Nutzung von Schleifpapier effizienter gestaltet werden. Außerdem kann die Sensorik genutzt werden, um mithilfe einer Nutzerdemonstration Daten über eine menschliche Bearbeitungsstrategie zu erfassen und im Anschluss zur Erstellung einer Roboterfertigkeit zu nutzen.

Ein Abdruck einer Werkstückoberfläche auf das Werkzeug kann erfasst werden. Eine Form eines Abdruckes kann bestimmt werden. Der Abdruck kann ein flächiger Abdruck sein. Der Abdruck kann ein linienförmiger Abdruck sein. Der Abdruck kann ein punktförmiger Abdruck sein. Die Form des Abdruckes kann als Feedback für eine Robotersteuerung verwendet werden. Ein Sollabdruck kann vorgegeben werden. Ausgleichsbewegungen können erzeugt werden, um einen vorgegebenen Sollabdruck zu erzielen. Die erfasste Druckverteilung kann genutzt werden, um Bearbeitungsstrategien durch Nutzerdemonstrationen systematisch aufzunehmen und daraus datenbasierte Roboterfertigkeiten mittels maschinellen Lernens zu erzeugen.

Zur Positionserfassung kann beispielsweise ein Winkellagegeber verwendet werden, zur Signalübertragung ein Schleifring. Auch eine drahtlose Realisierung ist möglich, bei der die Sensorik und deren Elektronik zur Auswertung komplett in das Werkzeug integriert sind. Gleiches gilt für eine Stromversorgung. Außerdem ist es auch möglich, dass die Signale zunächst nur aufgezeichnet werden und mit den aufgezeichneten Daten ein Bewegungsmodell erstellt wird, welches dann für eine zukünftige Bearbeitung genutzt werden kann. Ein solches Bewegungsmodell kann sogar auch ohne verbauten Sensor genutzt werden, um die Ausführung zu verbessern. Für den Fall einer reinen Datenaufzeichnung ist eine weitere alternative Realisierung denkbar, bei der die Daten mit einer Elektronik innerhalb des Werkzeugs gespeichert werden können, falls eine Datenübertragung über Kontakte oder kabellos nicht oder nur eingeschränkt möglich ist. Nach einer Demonstration könnten die Daten beispielsweise über ein Kabel an einen Computer übertragen werden, z.B. angesteckt an dem Werkzeug oder an der Arbeitsantriebsvorrichtung.

Mit der Erfindung wird eine Oberflächenbearbeitung verbessert. Eine Bearbeitungsqualität und/oder eine Bearbeitungssicherheit können/kann erhöht werden. Eine Bearbeitungszeit und/oder ein Werkzeugverschließ können/kann reduziert werden. Möglichkeiten zum Kontrollieren eines Werkzeugs, einer Arbeitsantriebsvorrichtung und/oder eines Roboters werden verbessert. Bearbeitungsparameter, wie Anpresskraft und/oder Abstand von Bearbeitungsspuren, können besser angepasst werden.

Nachfolgend wird ein Ausführungsbeispiel der Erfindung unter Bezugnahme auf eine Figur näher beschrieben, dabei zeigen schematisch und beispielhaft:

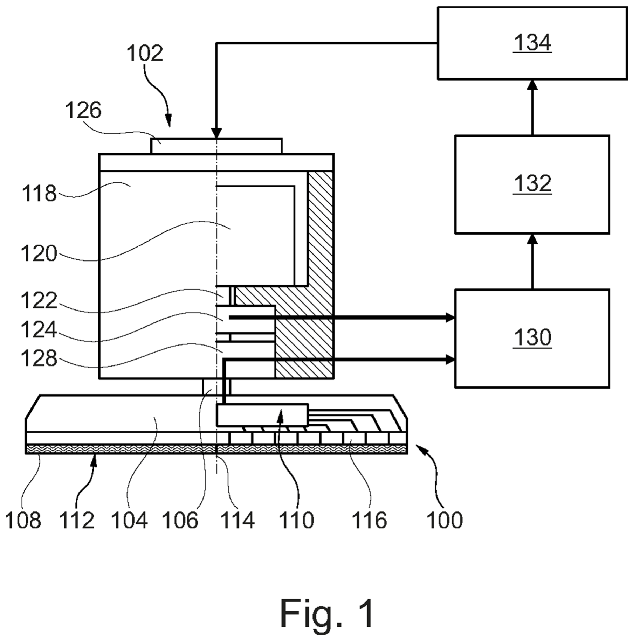

- Fig. 1: ein Werkzeug, eine Arbeitsantriebsvorrichtung und Verfahrensschritte zum robotergestützten Schleifen von Werkstückoberflächen.

Fig. 1 zeigt ein Werkzeug 100, eine Arbeitsantriebsvorrichtung 102 und Verfahrensschritte zum robotergestützten Schleifen von Werkstückoberflächen. Das Werkzeug 100 weist einen Basisabschnitt 104, einen Verbindungsabschnitt 106, einen Arbeitsabschnitt 108 und einen Sensorabschnitt 110 auf.

Der Basisabschnitt 104 ist scheibenförmig ausgeführt und weist eine Arbeitsseite und eine Rückseite auf. Der Verbindungsabschnitt 106 dient dazu, das Werkzeug 100 mit der Arbeitsantriebsvorrichtung 102 zu verbinden, ist bolzenförmig ausgeführt und an der Rückseite des Basisabschnitts 104 angeordnet. Als Arbeitsabschnitt 108 dient ein Schleifmittel mit einer Arbeitsfläche 112, beispielsweise eine Schleifscheibe, das an der Arbeitsseite des Basisabschnitts 104 angeordnet und auswechselbar befestigt ist. Das Werkzeug 100 und die Arbeitsantriebsvorrichtung 102 weisen eine Längs- und Drehachse 114 auf.

Der Sensorabschnitt 110 ist zwischen dem Basisabschnitt 104 und dem Arbeitsabschnitt 108 angeordnet und dient dazu, während einem Schleifen Kräfte ortsaufgelöst aufzunehmen. Dazu weist der Sensorabschnitt 110 entsprechend flächig wirksame oder in einer zur Arbeitsfläche 112 parallelen Sensorebene verteilt angeordnete Kraftsensoren, wie Kraftsensor 116, auf. Der Sensorabschnitt 110 ist zusammen mit einer elektronischen Kontrolleinrichtung, die dazu dient, ein Erfassen, Übertragen und Speichern von Sensordaten zu kontrollieren, in den Basisabschnitt 104 integriert.

Die Arbeitsantriebsvorrichtung 102 weist ein Gehäuse 118, einen Arbeitsantrieb 120 mit einer Antriebswelle 122, einen Drehwinkelgeber 124 und einen Verbindungsabschnitt 126 auf. Der Drehwinkelgeber 124 dient dazu, Drehwinkel der Antriebswelle 122 zu erfassen. Der Verbindungsabschnitt 126 ist als Werkzeugflansch ausgeführt und dient dazu, die Arbeitsantriebsvorrichtung 102 mit einem entsprechenden Anschlussflansch eines Roboters zu verbinden.

Das Werkzeug 100 ist mit seinem Verbindungsabschnitt 106 mit der Arbeitsantriebsvorrichtung 102 verbunden. Das Werkzeug 100 und die Arbeitsantriebsvorrichtung 102 weisen miteinander korrespondierenden Signalschnittstellen zur Signalübertragung 128 auf.

Während einem Schleifen werden mithilfe des Sensorabschnitts 110 am Werkzeug 100 ortsaufgelöst Kräfte aufgenommen und über die korrespondierenden Signalschnittstellen an die Arbeitsantriebsvorrichtung 102 übertragen. An der Arbeitsantriebsvorrichtung 102 werden mithilfe des Drehwinkelgebers 124 Drehwinkel erfasst. Die Signale des Sensorabschnitts 110 und die Signale des Drehwinkelgebers 124 werden zunächst einer Signalverarbeitung 130 unterzogen, die verarbeiteten Signale werden bei einer Bewegungsgenerierung 132 berücksichtigt und mit den generierten Bewegungen erfolgt eine Robotersteuerung 134.

### Bezugszeichen

- 100: Werkzeug
- 102: Arbeitsantriebsvorrichtung
- 104: Basisabschnitt
- 106: Verbindungsabschnitt
- 108: Arbeitsabschnitt
- 110: Sensorabschnitt
- 112: Arbeitsfläche
- 114: Längs- und Drehachse
- 116: Kraftsensor
- 118: Gehäuse
- 120: Arbeitsantrieb
- 122: Antriebswelle
- 124: Drehwinkelgeber
- 126: Verbindungsabschnitt
- 128: Signalübertragung
- 130: Signalverarbeitung
- 132: Bewegungsgenerierung
- 134: Robotersteuerung

## Patentansprüche

1. Werkzeug (100) zur kontaktbasierten Oberflächenbearbeitung, das Werkzeug (100) aufweisend einen Basisabschnitt (104), einen Arbeitsabschnitt (108) mit einer Arbeitsfläche (112) und einen Verbindungsabschnitt (106) zur Verbindung mit einer Arbeitsantriebsvorrichtung (102), **dadurch gekennzeichnet, dass** zwischen dem Basisabschnitt (104) und dem Arbeitsabschnitt (108) ein Sensorabschnitt (110) zum ortsaufgelösten Aufnehmen von Kräften wirksam ist.

2. Werkzeug (100) nach Anspruch 1, **dadurch gekennzeichnet, dass** der Sensorabschnitt (110) in einer Sensorebene verteilt angeordnete Sensorelemente (116) aufweist.

3. Werkzeug (100) nach wenigstens einem der Ansprüche 1 bis 2, **dadurch gekennzeichnet, dass** das Werkzeug (100) eine Signalschnittstelle, einen Datenspeicher, eine elektronische Kontrolleinrichtung, und/oder eine elektrische Leistungsschnittstelle aufweist.

4. Arbeitsantriebsvorrichtung (102) zum Antreiben eines Werkzeugs (100) nach wenigstens einem der Ansprüche 1 bis 3, **dadurch gekennzeichnet, dass** die Arbeitsantriebsvorrichtung (102) einen Arbeitsantrieb (120) und eine mit dem Verbindungsabschnitt (106) des Werkzeugs (100) korrespondierende Aufnahme aufweist.

5. Arbeitsantriebsvorrichtung (102) nach Anspruch 4, **dadurch gekennzeichnet, dass** die Arbeitsantriebsvorrichtung (102) einen Verbindungsabschnitt (126) zur Verbindung mit einem Roboter aufweist.

6. Arbeitsantriebsvorrichtung (102) nach wenigstens einem der Ansprüche 4 bis 5, **dadurch gekennzeichnet, dass** die Arbeitsantriebsvorrichtung (102) wenigstens eine Signalschnittstelle, einen Datenspeicher, eine elektronische Kontrolleinrichtung, und/oder wenigstens eine elektrische Leistungsschnittstelle aufweist.

7. Arbeitsantriebsvorrichtung (102) nach wenigstens einem der Ansprüche 4 bis 6, **dadurch gekennzeichnet, dass** die Arbeitsantriebsvorrichtung (102) eine mit einer Signalschnittstelle eines Werkzeugs (100) korrespondierende erste Signalschnittstelle und eine zweite Signalschnittstelle aufweist.

8. Arbeitsantriebsvorrichtung (102) nach wenigstens einem der Ansprüche 4 bis 7, **dadurch gekennzeichnet, dass** die Arbeitsantriebsvorrichtung (102) eine mit einer elektrischen Leistungsschnittstelle eines Werkzeugs (100) korrespondierende erste elektrische Leistungsschnittstelle und eine zweite elektrische Leistungsschnittstelle aufweist.

9. Arbeitsantriebsvorrichtung (102) nach wenigstens einem der Ansprüche 4 bis 8, **dadurch gekennzeichnet, dass** die Arbeitsantriebsvorrichtung (102) einen Drehwinkelgeber (124) aufweist.

10. Verfahren zur kontaktbasierten Oberflächenbearbeitung, **dadurch gekennzeichnet, dass** ein Werkzeug (100) nach wenigstens einem der Ansprüche 1 bis 3 und eine Arbeitsantriebsvorrichtung (102) nach wenigstens einem der Ansprüche 4 bis 9 verwendet werden, wobei das Werkzeug (100) mit der Arbeitsantriebsvorrichtung (102) verbunden ist.

11. Verfahren nach Anspruch 10, **dadurch gekennzeichnet, dass** ein Roboter mit einer elektronischen Kontrolleinrichtung verwendet wird, wobei die Antriebsvorrichtung (102) mit dem Roboter verbunden ist.

12. Verfahren nach wenigstens einem der Ansprüche 10 bis 11, **dadurch gekennzeichnet, dass** mithilfe des Sensorabschnitts (110) während einer Oberflächenbearbeitung Kräfte ortsaufgelöst aufgenommen und als Sensordaten ausgegeben, gespeichert und/oder verarbeitet werden.

13. Verfahren nach Anspruch 11 und Anspruch 12, **dadurch gekennzeichnet, dass** der Roboter während einer Oberflächenbearbeitung unter Berücksichtigung der Sensordaten und/oder der Drehwinkeldaten kontrolliert wird.

14. Verfahren nach Anspruch 11 und wenigstens einem der Ansprüche 12 bis 13, **dadurch gekennzeichnet, dass** durch Benutzerdemonstration unter Berücksichtigung der Sensordaten und/oder den Drehwinkeldaten Fertigkeiten gelernt werden, um einen Benutzer beim Ausführen von Aufgaben zu unterstützen, ein kollaboratives Ausführen von Aufgabe zu unterstützen und/oder Aufgaben mithilfe eines Roboters autonom auszuführen.

15. Computerprogramm zur kontaktbasierten Oberflächenbearbeitung unter Verwendung eines Werkzeugs (100) nach wenigstens einem der Ansprüche 1 bis 3, einer Arbeitsantriebsvorrichtung nach wenigstens einem der Ansprüche 4 bis 9, und/oder eines Roboters, **dadurch gekennzeichnet, dass** das Computerprogramm Programmcodeabschnitte umfasst, mit denen ein Verfahren nach wenigstens einem der Ansprüche 10 bis 14 ausführbar ist, wenn das Computerprogramm ausgeführt wird.
